# EUROPÄISCHE PATENTANMELDUNG

(11) **EP 2 866 218 A1**
(43) Veröffentlichungstag der Anmeldung: **29.04.2015**
(21) Anmeldenummer: 14002368.0
(22) Anmeldetag: 10.07.2014
(51) Int. Cl.: G09F 3/10, G09F 3/02, G09F 7/18

(54) **Befestigen von Schriftzeichen oder Symbolen**

(30) Priorität: 25.10.2013 DE 102013017765
(71) Anmelder: Linden GmbH, 58515 Lüdenscheid (DE)
(72) Erfinder: Nolte, Christian, 58540 Meinerzhagen (DE)
(74) Vertreter: Cohausz Hannig Borkowski Wißgott

(57) **Zusammenfassung**

Die Erfindung betrifft Schriftzeichen oder Symbole (1) mit einer flachen oder leicht gewölbten Rückseite, mit der das Zeichen/Symbol (1) durch einen Klebstoff auf einer Fläche insbesondere auf der lackierten Fläche eines Kfz. befestigbar ist, wobei der auf der Rückseite aufgebrachte Klebstoff (1b) einen Schaum (4) aufweist, in dem Mikrokapseln (5) eingebettet sind, die beim Ausüben eines Druckes auf den Schaum zerplatzen und eine Substanz insbesondere eine Flüssigkeit freigeben, durch die der Schaum eine klebende Eigenschaft erhält.

## Beschreibung

Die Erfindung betrifft Schriftzeichen oder Symbole mit einer flachen oder leicht gewölbten Rückseite, mit der das Zeichen/Symbol durch einen Klebstoff auf einer Fläche insbesondere auf der lackierten Fläche eines Kfz. befestigbar ist.

Es ist bekannt, durch Stanzen hergestellte Zeichen wie Embleme oder Schriftzüge auf Oberflächen in der Weise zu befestigen, dass auf der Rückseite des Zeichens/Emblems/Schriftzuges ein doppelseitig klebender Klebstoffstreifen befestigt wird, der durch ein Stanzwerkzeug entsprechend dem Zeichen konturgetreu hergestellt wird. Damit ist es erforderlich, für jedes Zeichen/Emblem/Schriftzug ein spezielles Stanzwerkzeug herzustellen und zu lagern, so dass ein erheblicher Kostenaufwand entsteht.

Aufgabe der Erfindung ist es, Zeichen/Embleme/Schriftzüge zu schaffen, bei denen es nicht erforderlich ist, für die Klebfläche speziell geformte Stanzwerkzeuge herzustellen.

Diese Aufgabe wird erfindungsgemäß dadurch gelöst, dass der auf der Rückseite aufgebrachte Klebstoff einen Schaum aufweist, in dem Mikrokapseln eingebettet sind, die beim Ausüben eines Druckes auf den Schaum zerplatzen und eine Substanz insbesondere eine Flüssigkeit freigeben, durch die der Schaum eine klebende Eigenschaft erhält.

Bei der Erfindung wird kein doppelseitiges Klebeband verwendet, sondern der Schriftzug wird mit einer dünnen Schaumschicht versehen, die Mikrokapseln aufweist. Diese Schaumschicht wird dann gleich während der Herstellung und vor dem Liefern an den Kunden insbesondere Kfz.-Hersteller mit einer Abdeckfolie rückseitig abgedeckt und dann wird über den gesamten Schriftzug ein Druck aufgebracht, der zum Platzen der Mikrohohlkapseln führt. Es entsteht damit eine dauerklebende Schicht auf der Rückseite des Schriftzuges, die durch die Folie abgedeckt ist. In diesem Zustand wird der Schriftzug an den Kunden insbesondere den Kfz.-Hersteller geliefert. Der Kunde braucht jetzt nur noch die Schutzfolie abzuziehen und den Schriftzug auf die Fläche anzudrücken.

Das Versehen von Schriftzeichen oder Symbolen mit einer solchen Klebstoffschicht erfordert keine speziell hergestellten Stanzwerkzeuge und führen zu einem besonders einfachen und preiswerten Herstellungsverfahren.

Vorzugsweise wird vorgeschlagen, dass die Substanz/Flüssigkeit ein Klebstoff ist. Auch wird vorgeschlagen, dass die Substanz/Flüssigkeit einen chemischen Stoff aufweist, der mit einem chemischen Stoff des Schaums derart reagiert, dass der Schaum eine klebende Eigenschaft erhält.

Von Vorteil ist, wenn der Schaum auf seiner dem Schriftzeichen oder Symbol abgewandten Seite durch eine entfernbare Folie oder ein entfernbares Papier abgedeckt ist.

Für ein Verfahren zum Herstellen von Schriftzeichen oder Symbolen zum Befestigen auf einer Fläche insbesondere eines Kfz. wird vorgeschlagen,
- dass zuerst das oder die hergestellten Schriftzeichen oder Symbol(e) rückseitig mit einer Schaumschicht belegt werden, die mit einer Substanz insbesondere Flüssigkeit gefüllte Mikrokapseln aufweist,
- dass dann die freie Oberfläche der Schaumschicht mit einer Abdeckfolie oder einem Abdeckpapier vollständig bedeckt wird, und
- dass dann auf die Schaumschicht ein solch großer Druck flächig aufgebracht wird, dass die Mikrokapseln platzen und die Substanz insbesondere Flüssigkeit frei geben, durch die die Schaumschicht eine klebende Eigenschaft erhält.

Hierbei ist auch von Vorteil, wenn die Abdeckfolie oder das Abdeckpapier von der klebenden Schaumschicht abgezogen und danach das/die Schriftzeichen oder Symbol(e) auf die insbesondere lackierte Fläche aufgedrückt wird.

Ein Ausführungsbeispiel der Erfindung ist in den Zeichnungen schematisch in Schnitten dargestellt und wird im Folgenden näher beschrieben. Es zeigen
- Fig. 1: das Aufbringen einer Mikrokapseln enthaltenen Schaumschicht auf ein Schriftzeichen oder Symbol,
- Fig. 2: das Versehen der Schaumschicht mit einer Abdeckfolie oder Abdeckpapier und dem Ausüben eines Druckes auf die Schaumschicht und
- Fig. 3: das Befestigen des Schriftzeichens oder Symbols auf der Fläche eines Kfz., nachdem die Abdeckfolie/Abdeckpapier abgenommen worden ist.

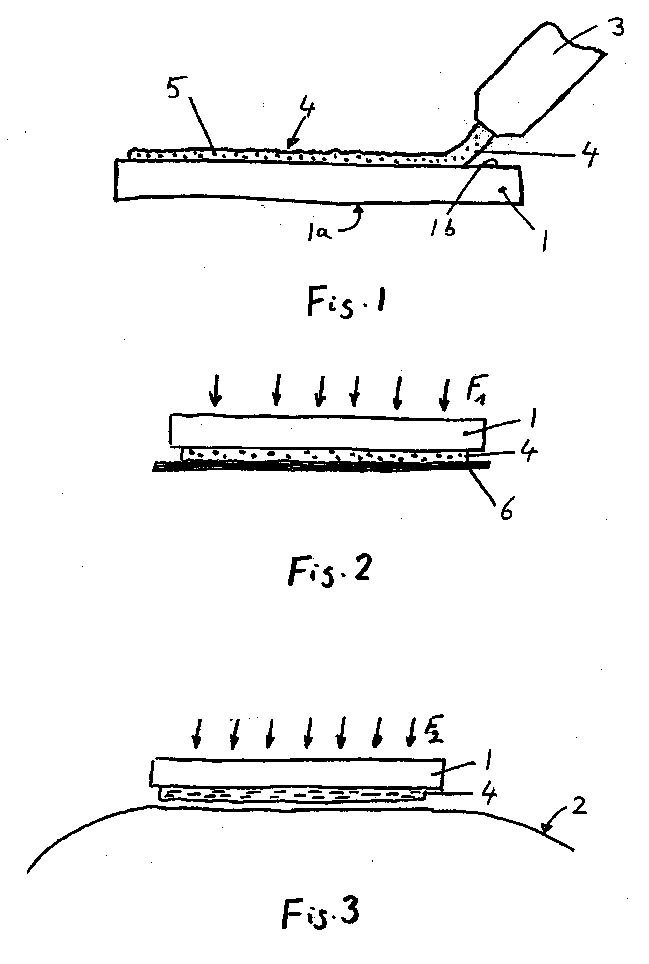

Die Erfindung betrifft Schriftzeichen oder Symbole 1 aus Kunststoff, die im Wesentlichen flach und ungekrümmt oder leicht gekrümmt sind und vorzugsweise auf der Fläche insbesondere lackierten Fläche 2 eines Kfz. durch Andrücken befestigt werden. Das Schriftzeichen/Symbol 1 weist eine Vorderseite oder Oberseite 1 a und eine Rückseite 1 b auf. Auf die Rückseite 1 b wird, wie in Fig. 1 dargestellt, insbesondere über eine Düse 3 eine Schaumschicht 4 aufgebracht, die die Rückseite 1 b vollflächig bedeckt. Diese dünne Schaumschicht 4 weist hierbei eine Dicke von ca. 0,5 bis 2 mm auf.

In der Schaumschicht 4 befinden sich eine hohe Anzahl von Mikrohohlkapseln 5, die über die Schicht 4 gleichmäßig verteilt sind und eine Substanz oder Flüssigkeit enthalten. Bei Ausüben eines Druckes auf die Schaumschicht 4 zerplatzen die Mikrokapseln 5 ab einem vorbestimmten Druck F1, so dass die Substanz oder Flüssigkeit aus den Mikrokapseln heraustritt in die Schaumschicht 4. Hierbei ist die Substanz/Flüssigkeit entweder selber ein Klebstoff, so dass durch das Heraustreten die Schaumschicht eine klebende Eigenschaft erhält oder aber die Substanz/Flüssigkeit weist einen chemischen Stoff auf, der mit einem chemischen Stoff des Schaums reagiert, so dass danach der Schaum die klebende Eigenschaft erhält.

Nachdem die Schaumschicht auf die Rückseite des Schriftzeichens/Symbols aufgebracht ist, wird die Schaumschicht durch eine Abdeckfolie oder ein Abdeckpapier 6 abgedeckt und erst dann wird auf diese drei Schichten der Druck F1 ausgeübt, damit die Mikrokapseln platzen und die Schaumschicht 4 klebend wird. In diesem Zustand werden die Schriftzeichen oder Symbole an die Kraftfahrzeugindustrie ausgeliefert.

Vor dem Anbringen der Schriftzeichen oder Symbole auf der insbesondere lackierten Fläche 2 eines Kfz. wird die Abdeckfolie / das Abdeckpapier 6 abgezogen und das Schriftzeichen/Symbol mit seiner klebenden Schaumschicht 4 auf die Kraftfahrzeugfläche 2 mit einem Druck F2 aufgedrückt (s. Fig. 3).

Solche Schriftzeichen oder Symbole lassen sich nicht nur bei Kraftfahrzeugen, sondern bei allen Flächen verwenden, auf denen Schriften/Symbole oder Grafiken befestigt werden sollen. Es sind zum Herstellen der Klebefläche keine Stanzwerkzeuge mehr erforderlich, wodurch auch deutlich geringere Lagerbestände entstehen. Ein Mindesthaltbarkeitsdatum ist eliminiert und ein "one piece flow" wird ermöglicht.

## Patentansprüche

1. Schriftzeichen oder Symbole (1) mit einer flachen oder leicht gewölbten Rückseite (1b), mit der das Zeichen/Symbol durch einen Klebstoff auf einer Fläche (2) insbesondere auf der lackierten Fläche eines Kfz. befestigbar ist, **dadurch gekennzeichnet, dass** der auf der Rückseite aufgebrachte Klebstoff einen Schaum (4) aufweist, in dem Mikrokapseln (5) eingebettet sind, die beim Ausüben eines Druckes auf den Schaum zerplatzen und eine Substanz insbesondere eine Flüssigkeit freigeben, durch die der Schaum eine klebende Eigenschaft erhält.

2. Schriftzeichen oder Symbol nach Anspruch 1, **dadurch gekennzeichnet, dass** die Substanz/Flüssigkeit ein Klebstoff ist.

3. Schriftzeichen oder Symbol nach Anspruch 1, **dadurch gekennzeichnet, dass** die Substanz/Flüssigkeit einen chemischen Stoff aufweist, der mit einem chemischen Stoff des Schaums (4) derart reagiert, dass der Schaum eine klebende Eigenschaft erhält.

4. Schriftzeichen oder Symbol nach einem der vorherigen Ansprüche, **dadurch gekennzeichnet, dass** der Schaum (4) auf seiner dem Schriftzeichen oder Symbol (1) abgewandten Seite durch eine entfernbare Folie oder ein entfernbares Papier (6) abgedeckt ist.

5. Verfahren zum Herstellen von Schriftzeichen oder Symbolen (1) zum Befestigen auf einer Fläche (2) insbesondere eines Kfz. nach einem der vorherigen Ansprüche, **dadurch gekennzeichnet, dass**
- dass zuerst das oder die hergestellten Schriftzeichen oder Symbol(e) (1) rückseitig mit einer Schaumschicht (4) belegt werden, die mit einer Substanz insbesondere Flüssigkeit gefüllte Mikrokapseln (5) aufweist,
- dass dann die freie Oberfläche der Schaumschicht (4) mit einer Abdeckfolie oder einem Abdeckpapier (6) vollständig bedeckt wird, und
- dass dann auf die Schaumschicht (4) ein solch großer Druck (F1) flächig aufgebracht wird, dass die Mikrokapseln (5) platzen und die Substanz insbesondere Flüssigkeit frei geben, durch die die Schaumschicht (4) eine klebende Eigenschaft erhält.

6. Verfahren zum Befestigen von nach Anspruch 5 hergestellten Schriftzeichen oder Symbolen (1) auf eine Fläche (2) insbesondere eines Kfz., **dadurch gekennzeichnet, dass** die Abdeckfolie oder das Abdeckpapier (6) von der klebenden Schaumschicht (4) abgezogen und danach das/die Schriftzeichen oder Symbol(e) (1) auf die insbesondere lackierte Fläche (2) aufgedrückt wird.
